**Europäisches Patentamt**

**European Patent Office**

**Office européen des brevets**

(19)

(11) Veröffentlichungsnummer: **0 449 171 A2**

## (12) EUROPÄISCHE PATENTANMELDUNG

(21) Anmeldenummer: 91104660.5

(22) Anmeldetag: 25.03.91

(51) Int. Cl.$^5$: **B05D 1/20**

(30) Priorität: 30.03.90 DE 4010201

(43) Veröffentlichungstag der Anmeldung:
02.10.91 Patentblatt 91/40

(84) Benannte Vertragsstaaten:
**BE DE DK FR GB GR IT NL SE**

(71) Anmelder: **HOECHST AKTIENGESELLSCHAFT**
**Postfach 80 03 20**
**W-6230 Frankfurt am Main 80(DE)**

(72) Erfinder: **Peterson, Ian Robert**
**Philipp-Wasserburg-Strasse 47**
**W-6500 Mainz(DE)**
Erfinder: **Möhwald, Helmuth, Prof. Dr.**
**Dr. Gebauer-Strasse 21**
**W-6530 Bingen(DE)**
Erfinder: **Bibo, Anna Maria**
**Lindenstrasse 8**
**W-6227 Oestrich(DE)**

(54) **Verfahren zur Verringerung der Defektdichte in ultradünnen Schichten.**

(57) Ein Verfahren zur Verminderung der Defektdichte in einer monomolekularen Schicht einer organischen, in Wasser nicht löslichen Verbindung, deren Molekül im wesentlichen regelmäßig angeordnet sind, bei dem diese Schicht mindestens 10-mal einen Phasenübergang zwischen teilweise geordneten Phasen des Schichtmaterials durchläuft, hat den Vorteil; daß mit einfachen technischen Aufwand nahezu fehlerfreie monomolekulare Schichten für diverse Anwendungszwecke hergestellt werden können.

EP 0 449 171 A2

Die Erfindung betrifft ein Verfahren zur Verringerung der Defektdichte in dünnen Schichten aus mindestens einer organischen Verbindung. Bei dem erfindungsgemäßen Verfahren wird an der Grenzfläche zwischen einem Gas und einer polaren Flüssigkeit eine Grenzschicht erzeugt, und diese wiederholten Phasenumwandlungen unterworfen. Die komprimierte Grenzschicht wird nach dem von Langmuir-Blodgett angegebenen Verfahren auf einen festen Träger übertragen.

Beschichtete Träger finden in der industriellen Technik in zunehmendem Maße Verwendung. Beispielsweise können die Reibungseigenschaften von Materialien durch Modifizierung der Oberfläche einem gewünschten Zweck angepaßt werden. Weiterhin kann es sich um einen Schutzfilm für darunterliegende Träger handeln, um deren besondere Oberflächeneigenschaften zu konservieren. Insbesondere haben jedoch in letzter Zeit beschichtete Träger als Komponenten in Bauelementen für die Kommunikationstechnik sowie als elektronische und optoelektronische Informationsspeicher Einsatz gefunden.

Insbesondere für die elektronischen und optischen Einsatzzwecke ist es erforderlich, ultradünne, zum Teil auch mehrlagige Beschichtungen mit einer geringen Defektdichte zu erzeugen, deren Lagen einen hohen Ordnungsgrad und eine einstellbare, möglichst homogene Schichtdicke haben, wobei dieser hohe Ordnungsgrad auch im Bereich einer hohen Anzahl von Beschichtungslagen erhalten bleiben soll.

Dünne und möglichst defektfreie Schichten sind z.B. für folgende Anwendungen von großem Interesse:

a) optische Anwendungen (gerichte Strahlung geringer Dämpfung, z.B. Lichtwellenleiter mit nichtlinearoptischen Eigenschaften),
b) elektrische Anwendungen (elektrische Leiter hoher Anisotropie, z.B. eindimensionale oder zweidimensionale Leiter auf dem Gebiet der Molekularelektronik),
c) "Wirtsgitter" für den definierten Einbau bzw. eine spezifische Bindung von funktionellen Gruppen oder Molekülen (z.B. Biomoleküle für Sensoren).

Es ist bereits bekannt, aus amphiphilen niedermolekularen Molekülen mit je einem polaren bzw. nichtpolaren Ende, wie etwa langkettigen Fettsäuren, auf der Oberfläche eines Nichtlösemittels wie Wasser monomolekulare Schichten zu erzeugen, in denen alle polaren Enden beispielsweise zum Wasser zeigen, während die unpolaren Enden in den Gasraum darüber hineinragen. Hierzu werden geringe Mengen solcher amphiphiler Stoffe in einem geeigneten Lösungsmittel gelöst und beispielsweise auf eine Wasseroberfläche ausreichender Größe gegeben, wo sie unter Verdunsten des Lösungsmittels zu einer zunächst nicht zusammenhängenden, monomolekularen Schicht spreiten. Durch Verschieben einer geeigneten Barriere wird die Wasseroberfläche verkleinert und die damit verbundene Zunahme der Oberflächenspannung als Funktion der noch zur Verfügung stehenden Fläche gemessen (d.h. von Schub-Flächen-Diagrammen, ($\pi$/A-Isotherme)).

Dabei ergibt sich eine zusammenhängende, auf molekularer Ebene geordnete monomolekulare Schicht. Beim Erreichen dieses quasi-festen Zustandes dieser monomolekularen Schicht wird dem weiteren Verschieben dieser Barriere ein deutlich meßbarer Widerstand entgegengesetzt, der das Erreichen dieses Zustandes anzeigt. Geeignete Träger können sodann durch die monomolekulare Schicht in das Wasser getaucht werden und überziehen sich beim Eintauchen und/oder Herausziehen ihrerseits mit einer monomolekularen Schicht des amphiphilen Stoffes, wobei die molekulare Ordnung in den Einzelschichten erhalten bleibt. Dieser wiederholbare Prozeß wird Langmuir-Blodgett-Technik genannt. Eine kontinuierliche Durchführung der Schichtübertragung ist möglich, jedoch sehr aufwendig (siehe A. Barraud et al. 1983, Thin Solid Films 99, 221).

Auch die Herstellung von dünnen Schichten aus polymeren Verbindungen mittels der Langmuir-Blodgett-Technik wurde bereits mehrfach beschrieben, beispielsweise in DE-A-3 843 194 und DE-A-3 911 929.

Ein wichtiges Problem bei der Herstellung dünner Schichten und bei ihrer Anwendung in den unterschiedlichsten Bereichen der Technik stellt die Defektdichte in der Schicht dar. Verständlicherweise machen sich bestimmte Defekte (sogenannte Disklinationen, disclinations) in den ultradünnen Schichten besonders störend bemerkbar, z.B. dadurch, daß an den Defektstellen keine oder nur geringe elektrische Isolation auftritt und somit die elektrische Isolatoreigenschaft der dünnen Schicht negativ beeinflußt wird. Die Abweichung der Eigenschaften der realen dünnen Schichten von denen der idealen, d.h. defektfreien Schicht nimmt mit wachsender Defektdichte zu. So wurde von Tredgold et al. (J. Phys. D 17 (1984), L5) und von Peterson (J. Mol. Electron. 2 (1986), 96) gezeigt, daß dünne Filme mit geringerer Defektdichte auch eine kleinere elektrische Leitfähigkeit besitzen, und daß die Leitfähigkeit im Bereich der Defektstellen deutlich erhöht ist.

In der Literatur wurden bislang im wesentlichen drei Verfahren zur Verbesserung der Qualität von dünnen Langmuir-Blodgett-Schichten beschrieben.

Beim ersten Verfahren erfolgt die Orientierung in der dünnen Schicht durch ein einfaches Zusammenschieben des Films auf der Wasseroberfläche (siehe z.B. N. Minari et al., Solid State Communications 65 (1988), 1259; R. Jones, R.H. Tredgold, J. Phys. D 21 (1988), 449).

Das zweite Verfahren beinhaltet eine Wärmebehandlung des schon auf einen Träger übertragenen Films (siehe z.B. L. Coleman et al. Thin Solid Films, 178 (1989) 227) M. Shibata et al. Thin Solid Films, 179 (1989) 433).

Bei der dritten Methode wird die dünne Schicht noch auf der Wasseroberfläche einer Wärmebehandlung bzw. einem Temperprozeß unterworden (siehe z.B. K. Miyano, A. Mori, Thin Solid Films 168 (1989), 141; Miyata, Thin Solid Films 178 (1989);
I.R. Peterson et al., Mol Cryst. Liq. Cryst 147 (1987), 141).

An den beschriebenen Verfahren ist nachteilig, daß sie einen vergleichsweise hohen Zeitaufwand erfordern, daß sie nur bei ausgewählten Dünnschicht-Materialien zur gewünschten Verbesserung führen, und/oder daß sie aufwendige Apparaturen notwendig machen.

Es bestand daher die Aufgabe, ein neues Verfahren zu schaffen, das eine Verringerung der Defektdichte in ultradünnen Schichten bewirkt, das experimentell leicht handhabbar ist, eine geringe Prozeßdauer ermöglicht und auf unterschiedliche Materialien anwendbar ist.

Die Aufgabe wird durch ein Verfahren zur Verminderung der Defektdichte in einer monomolekularen Schicht einer organischen, in Wasser nicht löslichen Verbindung gelöst, bei dem eine Schicht mit hoher Defektdichte mindestens zehnmal einem Phasenübergang (zwischen teilweise geordneten Phasen) unterworfen wird. In den beteiligten Phasen sind die Molekülschwerpunkte im wesentlichen regelmäßig angeordnet. Die Temperatur bei diesem Phasenübergang muß niedriger sein als die Phasenübergangstemperatur zur isotrop-flüssigen Phase des Schichtmaterials.

Als Material für die ultradünne Schicht sind organische, in Wasser nicht oder nur gering lösliche Verbindungen geeignet, wobei bevorzugt amphiphile Verbindungen zum Einsatz kommen, prinzipiell sind jedoch auch nicht-amphiphile Verbindungen geeignet. Besonders bevorzugt wird eine Schicht aus einer Fettsäure mit 5 bis 30 C-Atomen, insbesondere mit 8 bis 24 C-Atomen, eingesetzt.

Die Verbindungen können als Einzelsubstanzen oder als Mischungen mindestens zweier organischer Substanzen eingesetzt werden. Als die dünne Schicht tragende Phase wird vorzugsweise Wasser verwandt, darüber hinaus sind jedoch auch andere Phasen, wie z.B. wäßrige Salzlösungen, Glycerin, Dimethylformamid oder andere polare Flüssigkeiten mit hoher Oberflächenspannung einsatzfähig.

Bei dem erfindungsgemäßen Verfahren wird vorzugsweise ein Phasenübergang zwischen zwei Phasen, die sich durch die Richtung der Molekülneigung bezüglich der Nachbarmoleküle unterscheiden, mindestens zehn-, insbesondere mindestens zwanzigmal durchlaufen.

In einer bevorzugten Ausführungsform der Erfindung lassen sich die Phasen, zwischen denen der Phasenübergang erfolgt, durch die räumliche Anordnung der Moleküle in der Schicht und durch die Temperatur- bzw. Druck-Stabilitätsfunktion charakterisieren (siehe E. Stenhagen et al., Nature 156 (1945), 239; E.A. Braude, F.C. Nachod "Determination of Organic Structures by Physical Methods, Academic Press New York (1955), E. Stenhagen; M. Lundquist, Chem. Scripta 1, (1971), 5). Insbesondere geeignet sind Phasenübergänge zwischen $L_2$-, $L_2'$-, LS-, CS- und S-Phasen bei organischen Verbindungen mit langen aliphatischen Ketten, wie sie in den genannten Schriften beschrieben sind.

Der Phasenübergang kann durch Variation unterschiedlicher physikalischer oder chemischer Parameter hervorgerufen werden. Bevorzugt wird der Phasenübergang durch eine Änderung des auf die dünne Schicht lateral wirkenden Druckes, durch Temperaturänderung oder durch eine Erhöhung bzw. Erniedrigung der Ionenstärke im wäßrigen Medium (in dem die dünne Schicht tragenden Medium) verursacht. Auch durch gezielte Veränderung des pH-Wertes in der wäßrigen Lösung oder durch eine kombinierte Veränderung verschiedener (der genannten) Parameter, insbesondere von Temperatur und Druck, läßt sich die Umwandlung der einen Phase in eine andere bewerkstelligen.

Die Defektdichte der monomolekularen Schicht wird durch den Phasenübergang vermindert, wobei das Maß der Reduzierung der Defektdichte u.a. auch vom Material der dünnen Schicht abhängt.

Bevorzugterweise wird beim erfindungsgemäßen Verfahren die Defektdichte auf 0,01 bis 60 % der Defektdichte vor Behandlung reduziert. Besonders bevorzugt ist die Reduktion auf 0,05 bis 30 % insbesondere auf 0,1 bis 10 % der ursprünglichen Defektdichte.

Die ultradünne Schicht wird nach wiederholter Phasenumwandlung auf bekannte Weise auf ein Trägermaterial, beispielsweise ein festes Substrat übertragen. Im allgemeinen werden die Substratoberflächen vor der Beschichtung einer Reinigung unterzogen. Die festen Substrate können sowohl aus anorganischen als auch aus organischen Materialien bestehen. Beispiele für anorganische Materialien sind Metalle und Legierungen, wie Gold, Platin, Aluminium, Chrom, Stahl sowie Nichtmetalle oder oxidische Stoffe wie Silicium, Siliciumdioxid, Glas, Graphit, und keramische Werkstoffe. Aus der Gruppe der organischen Materialien seien vor allem polymere Werkstoffe, wie Polyester, Polycarbonat oder Polyamid genannt. Der jeweilige Verwendungszweck bestimmt die Auswahl des Substrats. Bei optischen Anwendungen kommen beispielsweise transparente oder reflektierende Substrate zum Einsatz, sind elektrische Eigenschaften von Interesse, werden metallisierte und dadurch leitende oder halbleitende Substrate (beispielsweise Silicium oder ITO, (ITO = Indium Tin Oxide) oder aber, falls erforderlich, Isolatoren zum Einsatz kommen.

Besonders geeignet sind dimensionsstabile, flache, ebene Substrate wie Filme, Folien, Bänder usw. Die Beschichtung kann ein- oder mehrseitig erfolgen.

Eine erfindungsgemäße Vorrichtung zur Verminderung der Defektdichte und zur Beschichtung eines festen Trägers mit einer monomolekularen Schicht mit verminderter Defektdichte enthält die folgenden wesentlichen Bestandteile:

    a) Ein horizontal angeordnetes Becken zur Aufnahme der polaren Flüssigkeit

    b) eine horizontal im Becken angeordnete bewegliche Barriere zum Stau der Oberflächenschicht (Veränderung des lateralen Druckes)

    c) eine Vorrichtung zum geregelten langsamen Eintauchen und Austauchen eines Trägers in den Kanal in der Nähe der Barriere, sowie gegegenenfalls

    d) eine Vorrichtung zum Erwärmen der Oberflächenschicht.

Mit der genannten Vorrichtung lassen sich Schichtelemente bestehend aus einem Träger und mindestens einer monomolekularen, geordneten Schicht mit verminderter Defektdichte gewinnen.

Die Erfindung wird durch die nachfolgenden Beispiele näher erläutert:

**Beispiele**

Die folgenden Versuche wurden mit einer Filmwaage Modell-FW1 der Firma Messegerätewerk Lauda, D-6970 Lauda, durchgeführt. Der Trog (Wanne) dieser Apparatur wurde mit 1 1 Wasser gefüllt, das zuvor in einer Millipore-Anlage (Fa. Millipore GmbH, D-6236 Eschborn) gereinigt wurde. Die Dimensionen der Wasseroberfläche betrug 20 cm x 50 cm. Die Filmwaage wurde bei einer gleichbleibenden Temperatur von 20°C gehalten. Bei den Versuchen wurde zum Erreichen der Phasenumwandlung der laterale Druck variiert, da dieser Parameter am schnellsten bzw. auf technisch einfachste Weise verändert werden kann.

Zur Beurteilung der Defektdichte bei erfindungsgemäß hergestellten dünnen Schichten wurde folgende Prozedur angewendet:

    a) Herstellung einer einfachen monomolekularen Schicht auf Wasser

    b) Übertragung dieser Schicht auf einen Träger

    c) Herstellung einer einfachen Schicht auf Wasser und nachfolgende wiederholte Kompression und Expansion

    d) Übertragung der dadurch gewonnenen "verbesserten" Schicht auf einen Träger

    e) die in b) und d) gewonnenen, einfach beschichteten Träger werden beide einem einheitlichen (85-fachen) Beschichtungsprozeß unterworfen, so daß eine vergleichende optische Auswertung der Defektdichte möglich ist

    f) Bestimmung der Disklinationsdichte (Dd) im Vergleich

**Beispiel 1** Verringerung der Defektdichte in einer Schicht aus 22-Tricosensäure

10 mg 22-Tricosensäure wurden in 10 ml Chloroform gelöst (Spreitlösung). Ein Tropfen konzentrierter Salzsäure wurde dem Wasser im Trog zugesetzt, um den pH-Wert auf 3 einzustellen. Die Wasseroberfläche wurde mit Hilfe der beweglichen Barriere und eines Saugrohrs gereinigt. Der Lateraldruck wurde gemessen und fortlaufend angezeigt.

Mit Hilfe einer geeichten Spritze wurden 100 $\mu$l der Spreitlösung auf die Wasseroberfläche aufgebracht. Nach Verdunstung des Lösungsmittels wurde die Barriere der Filmwaage so verschoben, daß der Lateraldruck innerhalb von 2 Minuten auf 35 mN/m anstieg.

Ein Siliziumträger wurde zur Hydrophobisierung mit Hexamethyldisilazan (HMDS) behandelt und sorgfältig mit Chloroform gereinigt. Der Siliziumträger wurde 10 mm tief in das Wasser des Trogs mit einer Geschwindigkeit von 1 mm/s eingetaucht, um eine Probe der Monoschicht nach dem Spreiten aufzunehmen.

Die Barriere wurde langsam zyklisch nach hinten und nach vorne bewegt, um den Lateraldruck wiederholt von 20 mN/m auf 30 mN/m zu steigern bzw. zu senken. Bei einer Temperatur von 20°C liegt der $L_2$-$L_2$'-Phasenübergang von 22-Tricosensäure bei ca. 25 mN/m, so daß bei jedem Zyklus der Übergang zweimal erfolgte. Die Geschwindigkeit der Barriere wurde so eingestellt, daß der gesamte Zyklus 5 Minuten dauerte. Der Zyklus wurde 20-Mal gefahren. Anschließend wurde der Siliziumträger mit einer Geschwindigkeit von 1 mm/s 10 mm tief ins Wasser eingetaucht und sofort mit der gleichen Geschwindigkeit wieder herausgezogen. Durch diesen Prozeßschritt wurde die defektarme Schicht auf den Siliziumträger übertragen.

Die Wasseroberfläche wurde anschließend mit Hilfe der Barriere gereinigt und mit 100 $\mu$l Spreitlösung versetzt. Die Monoschicht wurde bis zu einem Lateraldruck von 35 mN/m komprimiert. Bei gleichbleibendem Druck (35 mN/m) wurde der Siliziumträger 85-mal eingetaucht und 85-mal bei einer Geschwindigkeit von 10 mm/s hinausgezogen. Unter diesen Bedingungen ist die Übertragung jeder Monoschicht epitaktisch, so daß das Gitterrichtungsmuster der bereits aufgebrachten Monoschicht genau kopiert wird. Es werden so viele Schichten aufgebracht, bis die Doppelbrechung ausreicht, um sichtbar gemacht zu werden.

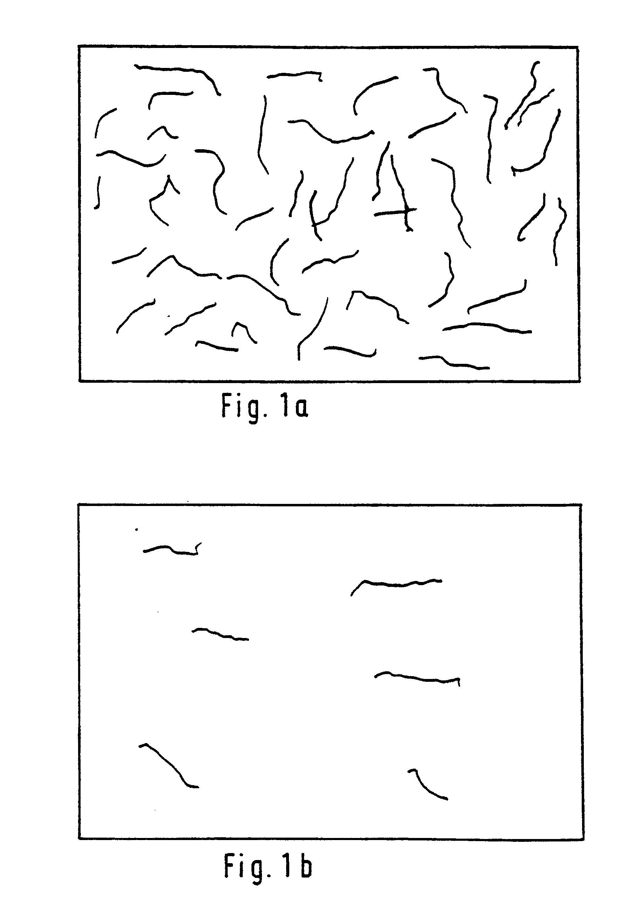

Der Träger wurde anschließend unter einem Polarisationsmikroskop im Auflicht zwischen fast gekreuzten Polarisatoren betrachtet. Die wesentlichen Merkmale des Bildes sind schematisch in Fig. 1a und 1b im Vergleich dargestellt. In einer geeichten Fläche wurden die offenen Orientierungsunstetigkeitslinien (Disklinationen) ausgezählt. Das Verhältnis der Anzahl dieser Linien zur Fläche stellt die Disklinationsdichte (Dd) dar. Es wurde festgestellt, daß der Wert (Dd) bei den Vergleichsmessungen (Anfangsproben, siehe Fig. 1a) 11,5 mm$^{-2}$ betrug, während die Disklinationsdichte (Dd) nach der erfindungsgemäßen Behandlung (siehe Fig. 1b) 0,23 mm$^{-2}$ betrug. Die erfindungsgemäß behandelte Schicht wies demnach eine deutlich verminderte Defektdichte auf, was aus der graphischen Darstellung der Disklinationen im mikroskopischen Bild in Fig. 1 deutlich hervorgeht.

**Beispiel 2** Verringerung der Defektdichte in einer Schicht aus Behensäure

Die Filmwaage wurde auf eine Temperatur von 20°C temperiert. 10 mg Behensäure wurden in 10 ml Chloroform gelöst. Ein Tropfen konzentrierter Salzsäure wurde dem Wasser im Trog zugesetzt, um den pH-Wert auf 3 einzustellen. Die Wasseroberfläche wurde mit Hilfe der beweglichen Barriere und eines Saugrohres gereinigt.

Mit Hilfe einer geeichten Spritze wurden 100 $\mu$l der Spreitlösung auf der Wasseroberfläche gespreitet. Nach Verdunsten des Lösungsmittels wurde die Barriere der Filmwaage so nach vorne gebracht, daß der Lateraldruck in einem Zeitraum von 2 Minuten auf 35 mN/m anstieg.

Ein Siliziumträger wurde mit Hexamethyldisilazan behandelt und sorgfältig mit Chloroform gereinigt. Der Siliziumträger wurde 10 mm tief ins Wasser (des Trogs) eingetaucht, um eine Vergleichsprobe der Monoschicht nach dem Spreiten zu gewinnen.

Die Barriere wurde anschließend zyklisch nach hinten und nach vorne bewegt, um den Lateraldruck wiederholt von 15 mN/m auf 25 mN/m zu bringen. Bei einer Temperatur von 20°C liegt der $L_2$-$L_2$'-Phasenübergang von Behensäure bei ca. 20 mN/m, so daß bei jedem Zyklus der Phasenübergang zweimal erfolgt. Die Geschwindigkeit wurde so eingestellt, daß der gesamte Zyklus 5 Minuten dauerte. Der Zyklus wurde 20-Mal durchgeführt. Der Siliziumträger wurde danach 10 mm tief ins Wasser eingetaucht, und dann sofort herausgezogen, wodurch die Übertragung einer einfachen Schicht (mit verminderter Defektdichte) erfolgte.

Die Wasseroberfläche wurde anschließend mit Hilfe der Barriere gereinigt. 100 $\mu$l der Spreitlösung wurden gespreitet. Die Monoschicht wurde bis zu einem Lateraldruck von 35 mN/m komprimiert. Bei gleichbleibendem Druck (35 mN/m) wurden sowohl der Siliziumträger mit der Vergleichsschicht als auch der mit der erfindungsgemäßen Schicht 85mal ein- und 85mal ausgetaucht.

Die Träger wurden unter einem Polarisationsmikroskop in Auflicht zwischen fast gekreuzten Polarisatoren beobachtet. Es wurde festgestellt, daß der Wert der Disklinationsdichte (Dd) der Vergleichsprobe 27 mm$^{-2}$ betrug, während die Disklinationsdichte beim Siliziumträger mit der erfindungsgemäßen Schicht gleich 0,55 mm$^{-2}$ bestimmt wurde, d.h. die Disklinationsdichte betrug nach Anwendung des neuen Verfahrens nur noch ca. 2 % des ursprünglichen Wertes.

**Beispiel 3** Verringerung der Defektdichte bei einer Schicht aus Cadmiumstearat

10 mg Stearinsäure wurden in 10 ml Chloroform gelöst. 1 ml einer früher vorbereiteten Lösung von Cadmiumchlorid mit einer Konzentration von 0,1 M wurde dem auf 20°C temperierten Wasser im Trog zugesetzt. Da der pH-Wert im Bereich von 7 (ohne Zusatz von Puffern) erhalten werden sollte, wurde Kohlendioxid ständig mit einem Schutzstrom aus Stickstoff von der Wasseroberfläche ferngehalten. Die Wasseroberfläche wurde mit Hilfe der beweglichen Barriere und eines Saugrohrs gereinigt.

Mit Hilfe einer geeichten Spritze wurden 100 $\mu$l Spreitlösung auf der Wasseroberfläche gespreitet. Nach Verdunsten des Lösungsmittels wurde die Barriere der Filmwaage so eingestellt, daß der Lateraldruck in einem Zeitraum von 2 Minuten auf 20 mN/m anstieg.

Ein Siliziumträger wurde mit Hexamethyldisilazan behandelt und sorgfältig mit Chloroform gereinigt. Der Siliziumträger wurde 10 mm tief ins Wasser des Trogs eingetaucht, um eine Vergleichsprobe der Monoschicht nach dem Spreiten zu haben.

Die Barriere wurde danach zyklisch nach hinten und nach vorne bewegt, um den Lateraldruck wiederholt von 5 mN/m auf 15 mN/m zu steigern. Der dabei auftretende Phasenübergang konnte noch nicht näher identifiziert werden, die dabei auftretenden Phasen unterscheiden sich jedoch durch die Orientierung der Moleküle in der Schicht.

Die Geschwindigkeit wurde so eingestellt, daß der gesamte Zyklus (Kompression und Expansion) 5 Minuten dauerte. Der Zyklus wurde 20-Mal gefahren. Anschließend wurde der Siliziumträger 10 mm tief ins Wasser eingetaucht und sofort ausgetaucht, wodurch eine einfache Schicht (mit reduzierter Defektdichte) auf den Träger übertragen wurde.

Die Wasseroberfläche wurde mit Hilfe der Barriere gereinigt und 100 µl Spreitlösung (22-Tricosensäure) gespreitet. Diese Monoschicht wurde bis auf einen Lateraldruck von 35 mN/m komprimiert. Bei gleichbleibendem Druck (35 mN/m) wurde der Siliziumträger dann 85-mal ein- und 85mal ausgetaucht.

Der Träger wurde unter einem Polarisationsmikroskop in Auflicht zwischen fast gekreuzten Polarisatoren beobachtet, um die Disklinationsdichte bei dem Schichtelement mit der erfindungsgemäß hergestellten ersten Schicht und dem mit einer ersten Schicht gemäß dem Stand der Technik durch Zählung zu ermitteln. Es wurde festgestellt, daß der Wert der Vergleichsprobe 56 mm$^{-2}$ betrug, während die Disklinationsdichte bei der erfindungsgemäßen Schicht zu 1,6 mm$^{-2}$ bestimmt wurde.

## Patentansprüche

1. Verfahren zur Verminderung der Defektdichte in einer monomolekularen Schicht einer organischen, in Wasser nicht löslichen Verbindung, deren Moleküle im wesentlichen regelmäßig angeordnet sind, dadurch gekennzeichnet, daß man eine Schicht mit hoher Defektdichte mindestens zehnmal einem Phasenübergang zwischen teilweise geordneten Phasen unterwirft.

2. Verfahren gemäß Anspruch 1, dadurch gekennzeichnet, daß eine Schicht, die aus einer amphiphilen Verbindung besteht, eingesetzt wird.

3. Verfahren gemäß Anspruch 1, dadurch gekennzeichnet, daß eine Schicht, die aus einer nicht amphiphilen Verbindung besteht, eingesetzt wird.

4. Verfahren gemäß Anspruch 1, dadurch gekennzeichnet, daß eine Schicht, die aus einer Fettsäure mit 5 bis 30 C-Atomen besteht, eingesetzt wird.

5. Verfahren gemäß Anspruch 1, dadurch gekennzeichnet, daß die Schicht mindestens zwanzigmal einem Phasenübergang zwischen zwei Phasen, die sich durch die Richtung der Kettenneigung bezüglich der Nachbarmoleküle unterscheiden, unterworfen wird.

6. Verfahren gemäß Anspruch 5, dadurch gekennzeichnet, daß der wiederholte Phasenübergang durch eine Variation des auf die Schicht wirkenden lateralen Druckes hervorge

rugen wird.

7. Verfahren gemäß Anspruch 6, dadurch gekennzeichnet, daß durch den wiederholten Phasenübergang die Defektdichte der monomolekularen Schicht auf 0,01 bis 60 % der ursprünglichen Schicht reduziert wird.

8. Verfahren gemäß Anspruch 6, dadurch gekennzeichnet, daß durch den wiederholten Phasenübergang die Defektdichte der monomolekularen Schicht auf 0,1 bis 10 % reduziert wird.

9. Verfahren gemäß Anspruch 5, dadurch gekennzeichnet, daß der wiederholte Phasenübergang durch eine Variation der Temperatur hervorgerufen wird.

10. Verfahren gemäß Anspruch 5, dadurch gekennzeichnet, daß der wiederholte Phasenübergang durch eine Variation der Ionenstärke in dem die dünne Schicht tragenden Medium hervorgerufen wird.

11. Vorrichtung zur Beschichtung eines festen Trägers mit einer monomolekularen Schicht mit verminderter Defektdichte aus einer amphiphilen Verbindung, bestehend aus
   a) einem horizontal angeordneten Becken zur Aufnahme einer polaren Flüssigkeit,
   b) einer horizontal im Becken angeordneten beweglichen Barriere zum Stau der Oberflächenschicht
   c) einer Vorrichtung zum geregelten langsamen Eintauchen und Austauchen eines festen Trägers in das Becken in der Nähe der Barriere und gegebenenfalls
   d) einer Vorrichtung zum Erwärmen der Oberflächenschicht.

12. Schichtelement bestehend aus mindestens einer monomolekularen geordneten Schicht einer amphiphilen Verbindung auf einem Träger, dadurch gekennzeichnet, daß die Schicht eine, durch einen mindestens zehnmal durchlaufenen Phasenübergang zwischen zwei geordneten Phasen verringerte Defektdichte aufweist.

Fig. 1a

Fig. 1b